# EUROPÄISCHE PATENTSCHRIFT

(11) **EP 4 002 098 B1**
(45) Veröffentlichungstag und Bekanntmachung des Hinweises auf die Patenterteilung: **31.12.2025**
(21) Anmeldenummer: 20208377.0
(22) Anmeldetag: 18.11.2020
(51) Int. Cl.: G06F 8/60, G06F 8/36, G06F 9/445, G06F 9/48, G06F 9/50, G06F 9/455

(54) **VERFAHREN ZUR BEREITSTELLUNG DER FUNKTIONALITÄT VON MEHREREN MIKRODIENSTEN UND/ODER DER FUNKTIONALITÄT VON MEHREREN SOFTWARE-CONTAINERN MITTELS EINER CLOUD-INFRASTRUKTUR, SYSTEM, VERWENDUNGSSYSTEM, COMPUTERPROGRAMM UND COMPUTERLESBARES MEDIUM**
METHOD FOR PROVIDING FUNCTIONALITY OF MULTIPLE MICROSERVICES AND / OR FUNCTIONALITY OF A PLURALITY OF SOFTWARE CONTAINERS USING A CLOUD INFRASTRUCTURE, SYSTEM, USE SYSTEM, COMPUTER PROGRAM, AND COMPUTER READABLE MEDIUM
PROCÉDÉ DE FOURNITURE DE LA FONCTIONNALITÉ DE PLUSIEURS MICROSERVICES ET/OU DE LA FONCTIONNALITÉ DE PLUSIEURS CONTENEURS LOGICIELS AU MOYEN D'UNE INFRASTRUCTURE EN NUAGE, SYSTÈME, SYSTÈME D'UTILISATION, PROGRAMME INFORMATIQUE ET SUPPORT LISIBLE PAR ORDINATEUR

(43) Veröffentlichungstag der Anmeldung: 25.05.2022
(73) Patentinhaber: Deutsche Telekom AG, 53113 Bonn (DE)
(72) Erfinder: JAHN, Carl, 65191 Wiesbaden (DE); HOFFMANN, Robert, 65527 Niedernhausen (DE); OBENAUER, Felix, 55116 Mainz (DE)
(74) Vertreter: Schwöbel, Thilo K.

(56) Entgegenhaltungen:
- US-A1- 2017 201 569
- US-A1- 2019 102 157
- GOUVAS PANAGIOTIS ET AL: "A Context Model and Policies Management Framework for Reconfigurable-by-design Distributed Applications", PROCEDIA COMPUTER SCIENCE, ELSEVIER, AMSTERDAM, NL, vol. 97, 17 October 2016 (2016-10-17), pages 122 - 125, XP029771114, ISSN: 1877-0509, DOI: 10.1016/J.PROCS.2016.08.288

## Beschreibung

### Stand der Technik

Die Erfindung betrifft ein Verfahren zur Bereitstellung der Funktionalität von mehreren Mikrodiensten und/oder der Funktionalität von mehreren Software-Containern mittels einer Cloud-Infrastruktur, wobei bezüglich der Mikrodienste und/oder der Software-Container ein Software-Container-Orchestrierungssystem zu deren Bereitstellung und/oder Skalierung und/oder Verwaltung verwendet wird, wobei durch das Software-Container-Orchestrierungssystem wenigstens eine erste Umgebung und eine zweite Umgebung zur Verfügung gestellt werden, wobei die erste Umgebung Instanzen von ersten Mikrodiensten und/oder Instanzen von ersten Software-Containern als Teil einer ersten Instanz des Software-Container-Orchestrierungssystems umfasst, wobei die zweite Umgebung Instanzen von zweiten Mikrodiensten und/oder Instanzen von zweiten Software-Container als Teil einer zweiten Instanz des Software-Container-Orchestrierungssystems umfasst.

Die Erfindung betrifft des Weiteren ein System zur Bereitstellung der Funktionalität von mehreren Mikrodiensten und/oder der Funktionalität von mehreren Software-Containern mittels einer Cloud-Infrastruktur, wobei bezüglich der Mikrodienste und/oder der Software-Container ein Software-Container-Orchestrierungssystem zu deren Bereitstellung und/oder Skalierung und/oder Verwaltung verwendet wird, wobei durch das Software-Container-Orchestrierungssystem wenigstens eine erste Umgebung und eine zweite Umgebung zur Verfügung gestellt werden, wobei die erste Umgebung Instanzen von ersten Mikrodiensten und/oder Instanzen von ersten Software-Containern als Teil einer ersten Instanz des Software-Container-Orchestrierungssystems umfasst, wobei die zweite Umgebung Instanzen von zweiten Mikrodiensten und/oder Instanzen von zweiten Software-Container als Teil einer zweiten Instanz des Software-Container-Orchestrierungssystems umfasst.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Mit dem aktuellen Trend der agilen Software-Entwicklung gibt es die Notwendigkeit, flexibler und agiler zu sein und die Bedingungen für die Implementierung neuer Software-Features oder durch die Wartung bestehender Dienste zu verbessern; in diesem Zusammenhang wird auf die Druckschrift US 2019/102157 A1 verwiesen. Diese offenbart das Verteilen von Container Mikrodienste auf Computerumgebungen anhand von Deploymentkriterien. Weiterhin offenbart US 2017/201569 A1 das Umkonfigurieren einer Cloud Anwendung bzw. einer Cloudresource während die Anwendung auf der Cloudresource verteilt wird und GOUVAS PANAGIOTIS ET AL: "A Context Model and Policies Management Framework for Reconfigurable-by-design Distributed Applications", PROCEDIA COMPUTER SCIENCE, ELSEVIER, AMSTERDAM, NL, Bd. 97, 17. Oktober 2016 (2016-10-17), Seiten 122-125, ISSN: 1877-0509, DOI: 10.1016/J.PROCS.2016.08.288 offenbart eine verteilte Anwendung deren Konfiguration abhängig von dem Anwendungskontext angepasst wird. Um die Realisierung von großen monolithischen Softwaresystemem zu überwinden, auf dem jede Funktionalität mit nur einem großen Dienst/Software implementiert wird, werden Mikrodienste und containerisierte Software bzw. Software-Container verwendet.

Mikrodienste sind Dienste oder Software, die nur für eine minimale Aufgabe zuständig sind (z.B. Daten in einer Datenbank speichern oder Daten aus einem Netzwerkspeicher liefern), ohne große Geschäftslogik. Die Hauptziele von Mikrodiensten sind die Funktionalität des Dienstes so schmal wie möglich und mit einer klaren Schnittstelle für andere Dienste zu realisieren sowie in der Lage zu sein, den Dienst innerhalb eines minimalen Zeitrahmens zu realisieren.

Solche Mikrodienste laufen heutzutage in einem separaten Container oder Software-Container, insbesondere Docker-Container, wobei solche Software-Container, insbesondere Docker-Container, Virtualisierungstechniken verwenden, um Softwarepakete in Form von Container zu liefern. Die Software-Container sind voneinander isoliert und können über definierte Kanäle miteinander interagieren. Alle benötigten Software-Container werden auf einem Cluster bereitgestellt, meistens einem Kubernetes-Cluster, das automatisch die Bereitstellung und Skalierung der verschiedenen Software-Container (bzw. Docker-Container) übernimmt. Jeder Mikrodienst kann auch auf mehrere laufende Container verteilt werden, um die Plattform zu skalieren und einen Zustand der Redundanz zu erreichen. Es ist hierbei leicht möglich, dass ein Projekt oder Produkt aus mehreren hundert Mikrodiensten besteht, die konfiguriert und in einem Cluster bereitgestellt werden müssen.

Bei der Bereitstellung von mehreren hundert Mikrodiensten und sogar mehreren Containern für einen Dienst für verschiedene Umgebungen besteht die Notwendigkeit, die Konfiguration und Bereitstellung effizient zu handhaben. Bei dieser riesigen Menge an laufenden Software-Containern und implementierten Mikrodiensten ist es nicht möglich, die benötigte Konfiguration manuell zu pflegen und zu aktualisieren.

### Offenbarung der Erfindung

Der Erfindung liegt die Aufgabe zugrunde, ein Verfahren zur Bereitstellung der Funktionalität von mehreren Mikrodiensten und/oder der Funktionalität von mehreren Software-Containern mittels einer Cloud-Infrastruktur bereitzustellen, wobei bezüglich der Mikrodienste und/oder der Software-Container ein Software-Container-Orchestrierungssystem zu deren Bereitstellung und/oder Skalierung und/oder Verwaltung verwendet wird, wobei es das Verfahren in vergleichsweise einfacher und effizienter Weise ermöglicht, sowohl ein weniger fehleranfälliges Verfahren und eine effizientere Bereitstellung von Mikrodiensten und/oder Software-Container zu ermöglichen.

Die Aufgabe wird erfindungsgemäß gelöst durch ein Verfahren gemäß Anspruch 1.

Es ist dadurch gemäß der vorliegenden Erfindung in vorteilhafter Weise möglich, dass insbesondere durch Nutzung des den verschiedenen Umgebungen übergeordneten Verwendungssystems die Möglichkeit geschaffen wird, mit einer geringeren Fehleranfälligkeit die gesamte mit einem Mikrodienst bzw. der Funktionalität eines Mikrodienstes und/oder mit einem Software-Container bzw. der Funktionalität eines Software-Containers verbundene Konfiguration zu handhaben. Ferner ermöglicht die Nutzung des den verschiedenen Umgebungen übergeordneten Verwendungssystems die Mikrodienste und/oder Software-Container in der jeweiligen Umgebung einzusetzen und/oder zu vermitteln und den Benutzern des Verwendungssystem, beispielsweise Entwickler, eine einfach zu bedienende Benutzeroberfläche zur Verfügung zu stellen, um den aktuellen Status eines Dienstes zu überprüfen und die Werbung für solche Dienste zu handhaben.

Gemäß einer bevorzugten Ausführungsform der vorliegenden Erfindung ist es vorgesehen, dass das Verwendungssystem eine Mehrzahl an Deploymentsätzen aufweist oder verwaltet, wobei jeder Deploymentsatz eine oder mehrere Deployment-Manifestvorlagen und die zugehörige Konfiguration umfasst, wobei die Deployment-Manifestvorlagen jeweils auf entsprechende Software-Container verweisen und beschreiben, wie diese Software-Container bereitgestellt werden müssen, wobei einem Deploymentsatz die erste Umgebung als Startumgebung zugeordnet ist, wobei immer, wenn eine neue Version für einen Software-Container, auf den in dem Deploymentsatz verwiesen wird, erstellt wird, der Software-Container automatisch in diese Startumgebung ausgerollt wird und wobei, wenn sich ein Deploymentsatz in einem stabilen Zustand befindet, der Deploymentsatz in die zweite Umgebung befördert wird, wobei hierbei insbesondere der aktuelle Zustand von Vorlagen und der eingesetzten Versionen von Software-Container fixiert wird und diesen Zustand auf die zweite Umgebung angewendet wird.

Hierdurch ist es erfindungsgemäß vorteilhaft möglich, dass eine Konfiguration oder Instanz eines Mikrodienstes und/oder eines Software-Containers von einer Umgebung zu einer weiteren Umgebung in einfacher Weise durch Verschiebung oder Beförderung eines Deploymentsatzes erfolgen kann.

Gemäß der vorliegenden Erfindung ist es vorgesehen, dass das Verwendungssystem neben der ersten Umgebung und der zweiten Umgebung wenigstens eine dritte Umgebung berücksichtigt oder umfasst, wobei die Beförderung eines Deploymentsatzes einem sukzessiven Durchlaufen der Umgebungen entsprechend einer Anordnung dieser Umgebungen entspricht, wobei die Umgebungen in sich geschlossen sind und insbesondere Mikrodienste einer der Umgebungen keine Interaktion mit den Mikrodiensten in einer anderen Umgebung haben.

Hierdurch ist es erfindungsgemäß in vorteilhafter Weise möglich, dass ein Entwicklungsprozess für Mikrodienste und/oder Software-Container bzw. größere Softwaresysteme in einer logischen und zielgerichteten Art und Weise dadurch realisierbar sind, dass entsprechende Deploymentsätze sukzessive verschiedene Umgebungen durchlaufen.

Gemäß der vorliegenden Erfindung ist es vorgesehen, dass die Beförderung - von der ersten Umgebung zur zweiten Umgebung oder zwischen zwei anderen Umgebungen - von wenigstens einem Mikrodienst und/oder von wenigstens einem Software-Container und/oder von wenigstens einem Deploymentsatz wenigstens eine teilweise Umkonfigurierung hinsichtlich wenigstens eines Teils der nachfolgenden Parameter umfasst:
-- Logging und/oder Monitoring,
-- Art, Definition und/oder Behandlung von Anwendungs- oder Verarbeitungsgeheimnissen,
-- Verbindungen zu externen Ressourcen und Netzwerkregeln,
-- Automatische Skalierung,
-- Technische Daten oder Kennzahlen von Software-Container, insbesondere hinsichtlich zur Verfügung stehender Speicherplatz und Prozessorleistung.

Hierdurch kann in vorteilhafter Weise sichergestellt werden, dass beispielsweise in einer Entwicklungsumgebung Parameter angewendet werden, die besonders auf die Nutzung als Entwicklungsumgebung angepasst sind, während beispielsweise in einer Test- oder Produktivumgebung ebenfalls solche Parameter oder Parametereinstellungen angewendet werden, die besonders auf die Nutzung als Testoder Produktivumgebung angepasst sind.

Gemäß einer weiteren Ausführungsform der vorliegenden Erfindung ist es vorgesehen, dass als Software-Container-Orchestrierungssystem Kubernetes-Cluster vorgesehen sind und/oder dass als Software-Container insbesondere Docker-Container vorgesehen sind, wobei insbesondere Implementierungen der Kubernetes-Cluster in Kubernetes-Implementierungsmanifesten realisiert sind, insbesondere als YAML-Dateien, YAML Ain't Markup Language.

Hierdurch ist es gemäß einer solchen Ausführungsform der Erfindung vorteilhaft möglich, dass in besonders einfacher und effizienter Weise die erfindungsgemäße Zusammenfassung verschiedener Umgebungen möglich ist.

Gemäß der vorliegenden Erfindung ist es vorgesehen, dass die erste Umgebung eine Entwicklungsumgebung, die zweite Umgebung eine Testumgebung und die dritte Umgebung eine Produktivumgebung ist.

Gemäß einer weiteren Ausführungsform der vorliegenden Erfindung ist es vorgesehen, dass zur Speicherung der Umgebungen und/oder ihrer Bestandteile eine Datenbankfunktionalität verwendet wird, insbesondere in Form einer Git-Repository.

Gemäß einer weiteren Ausführungsform der vorliegenden Erfindung ist es vorgesehen, dass das den Umgebungen übergeordnete Verwendungssystem eine Visualisierungsfunktionalität und/oder eine Anwendungsschnittstellenfunktionalität aufweist.

Des Weiteren wird die Aufgabe gelöst durch ein System gemäß Anspruch 5.

Es ist dadurch gemäß der vorliegenden Erfindung in vorteilhafter Weise möglich, ein zum erfindungsgemäßen Verfahren korrespondierendes erfindungsgemäßes System bereitzustellen, so dass insbesondere durch Nutzung des den verschiedenen Umgebungen übergeordneten Verwendungssystems die Möglichkeit geschaffen wird, mit einer geringeren Fehleranfälligkeit die gesamte mit einem Mikrodienst bzw. der Funktionalität eines Mikrodienstes und/oder mit einem Software-Container bzw. der Funktionalität eines Software-Containers verbundene Konfiguration zu handhaben.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung, insbesondere auf dem System bzw. dem Verwendungssystem, ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf einer programmierbaren Einrichtung, insbesondere auf dem System bzw. dem Verwendungssystem, speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Situation zur Veranschaulichung einer Cloud-Infrastruktur mit einem Software-Container-Orchestrierungssystem und einer Mehrzahl an Mikrodiensten und/oder Software-Container.
- **Figur 2**: zeigt schematisch eine Mehrzahl an Umgebungen sowie ein übergeordnetes Verwendungssystem zur Durchführung des erfindungsgemäßen Verfahrens, wobei jede der Umgebungen eine Mehrzahl an Mikrodiensten und/oder Software-Containern aufweist.
- **Figur 3**: zeigt schematisch ein Kommunikationsdiagramm zur Veranschaulichung des Datenflusses zwischen verschiedenen Teilen eines erfindungsgemäßen Systems.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequentiellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

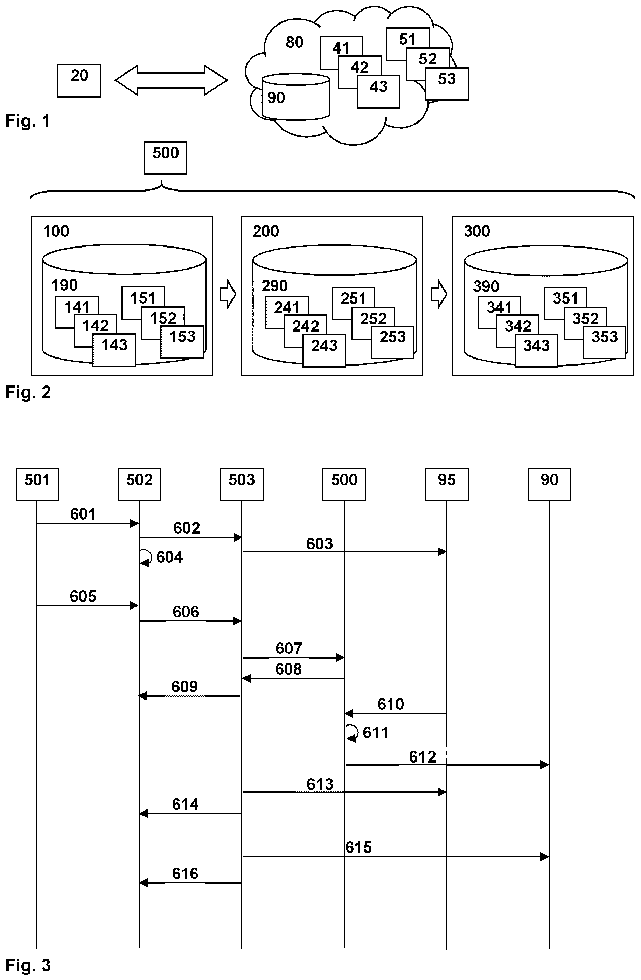

In Figur 1 ist schematisch eine Situation zur Veranschaulichung einer Cloud-Infrastruktur 80 mit einem Software-Container-Orchestrierungssystem 90 und einer Mehrzahl an Mikrodiensten 41, 42, 43 und/oder Software-Containern 51, 52, 53 zusammen mit einem die Cloud-Infrastruktur 80 nutzenden Benutzer 20 dargestellt. Bei dem Benutzer handelt es sich insbesondere um einen operativen Benutzer 20, d.h. eine Person, welche das durch die Cloud-Infrastruktur 80 zur Nutzung bereitgestellte und die Mehrzahl an Mikrodiensten 41, 42, 43 und/oder Software-Containern 51, 52, 53 umfassende Softwaresystem bzw. die Software-Anwendung operativ nutzt.

In Figur 2 ist schematisch eine Mehrzahl an Umgebungen 100, 200, 300 sowie ein übergeordnetes Verwendungssystem 500 zur Durchführung des erfindungsgemäßen Verfahrens dargestellt, wobei jede der Umgebungen 100, 200, 300 eine Mehrzahl an Mikrodiensten und/oder Software-Containern aufweist.

Die erste Umgebung 100 weist im dargestellten Beispiel der Figur 2 Instanzen von ersten Mikrodiensten 141, 142, 143 und/oder Instanzen von ersten Software-Containern 151, 152, 153 als Teil einer ersten Instanz des Software-Container-Orchestrierungssystems 190 auf. Die zweite Umgebung 200 weist Instanzen von zweiten Mikrodiensten 241, 242, 243 und/oder Instanzen von zweiten Software-Container 251, 252, 253 als Teil einer zweiten Instanz des Software-Container-Orchestrierungssystems 290 auf. Die dritte Umgebung 300 weist Instanzen von dritten Mikrodiensten 341, 342, 343 und/oder Instanzen von dritten Software-Container 351, 352, 353 als Teil einer dritten Instanz des Software-Container-Orchestrierungssystems 390 auf. Zur Verwaltung und Konfiguration sowohl der Instanzen des Software-Container-Orchestrierungssystems 190, 290, 390 als auch der Instanzen von ersten, zweiten und dritten Mikrodiensten 141, 142, 143, 241, 242, 243, 341, 342, 343 und/oder von ersten, zweiten und dritten Software-Containern 151, 152, 153, 251, 252, 253, 351, 352, 353 wird erfindungsgemäß ein den Umgebungen 100, 200, 300 übergeordnetes Verwendungssystem 500 benutzt.

Erfindungsgemäß wird in einem ersten Schritt wenigstens eine Instanz von wenigstens einem ersten Mikrodienst 141 und/oder wenigstens eine Instanz von wenigstens einem ersten Software-Container 151 als von der ersten Umgebung 100 in die zweiten Umgebung 200 zu verschieben detektiert. In einem zweiten Schritt wird die wenigstens eine Instanz des wenigstens einen ersten Mikrodienstes 141 und/oder die wenigstens eine Instanz des wenigstens einen ersten Software-Containers 151 durch das Verwendungssystem 500 in die zweite Umgebung 200 integriert oder befördert, wobei hierbei die wenigstens eine Instanz des wenigstens einen ersten Mikrodienstes 141 und/oder die wenigstens eine Instanz des wenigstens einen ersten Software-Containers 151 von einer der ersten Umgebung 100 entsprechenden Konfiguration zu einer der zweiten Umgebung 200 entsprechenden Konfiguration automatisch umkonfiguriert wird, so dass die wenigstens eine Instanz des wenigstens einen ersten Mikrodienstes 141 zu einer Instanz eines zweiten Mikrodienstes 241 und/oder die wenigstens eine Instanz des wenigstens einen ersten Software-Containers 151 zu einer Instanz eines zweiten Software-Containers 251 wird.

In Figur 3 ist schematisch ein Kommunikationsdiagramm zur Veranschaulichung des Datenflusses zwischen verschiedenen Teilen eines erfindungsgemäßen Systems dargestellt: Ein Nutzer 501 des Systems hat zumindest indirekten Zugang zum den Umgebungen 100, 200, 300 übergeordneten Verwendungssystem 500 und zum Software-Container-Orchestrierungssystem 90. Das übergeordnete Verwendungssystem 500 umfasst erfindungsgemäß bzw. mit dem übergeordneten Verwendungssystem 500 ist verbunden bzw. zugeordnet eine Visualisierungsfunktionalität 502 und/oder eine Anwendungsschnittstellenfunktionalität 503. Der Nutzer 501 ist als ein das übergeordnete Verwendungssystem 500 nutzender Nutzer dargestellt. Bei dem Nutzer 501 handelt es sich insbesondere um eine Person, welche verschiedene, den jeweiligen Umgebungen 100, 200, 300 zugeordnete Instanzen 190, 290, 390 des Software-Container-Orchestrierungssystems 90 sowie das diesen Umgebungen (und damit auch diesen Instanzen 190, 290, 390) übergeordnete Verwendungssystem 500 nutzt, insbesondere zur Entwicklung, Testung, Fehlerbehebung, etc. der durch die Cloud-Infrastruktur 80 bzw. in den jeweiligen Umgebungen 100, 200, 300 bereitgestellte Mehrzahl an Instanzen 141, 142, 143, 241, 242, 243, 341, 342, 343 von Mikrodiensten 41, 42, 43 und/oder Instanzen 151, 152, 153, 251, 252, 253, 351, 352, 353 von Software-Containern 51, 52, 53. In Figur 3 ist neben dem Nutzer 501, der Visualisierungsfunktionalität 502, der Anwendungsschnittstellenfunktionalität 503, dem übergeordneten Verwendungssystem 500 und dem Software-Container-Orchestrierungssystem 90 ferner eine Datenbankfunktionalität 95 dargestellt.

In einem ersten Prozessschritt 601 öffnet der Nutzer 501 die Web-Benutzeroberfläche bzw. die Visualisierungsfunktionalität 502 (nachfolgend auch als Promodash bezeichnet) bzw. deren Benutzerschnittstelle. Um auf diese Benutzerschnittstelle zugreifen zu können, muss sich der Nutzer 501 auch anmelden mit seinem bereitgestellten Konto. In einem zweiten Prozessschritt 602 erhält die Web-Benutzeroberfläche bzw. die Visualisierungsfunktionalität 502 (Promodash) die benötigten Informationen von der Anwendungsschnittstellenfunktionalität 503 (welche im Folgenden auch als Promotor REST API bezeichnet wird). In einem dritten Prozessschritt 603 führt die Anwendungsschnittstellenfunktionalität 503 (Promotor-API) ein Promotor-Befehlszeilen-Tool (d.h. ein Skriptwerkzeug) aus und sammelt alle benötigten Informationen bezüglich der vorhandenen Deploymentsätze. In einem vierten Prozessschritt 604 wird auf der Visualisierungsfunktionalität 502 (bzw. der Benutzeroberfläche) eine Übersicht über alle gegebenen Deploymentsätze für alle Umgebungen 100, 200, 300 dargestellt. In einem fünften Prozessschritt 605 kann der Nutzer 501 für jeden Deploymentsatz eine Beförderung bzw. ein Deployment in einer höheren oder weiteren Umgebung, d.h. eine sogenannte Promotion, durchführen. Das bedeutet, dass wenigstens eine Instanz von wenigstens einem Mikrodienst und/oder wenigstens eine Instanz des wenigstens einem Software-Container von einer der Quellumgebung (beispielsweise der ersten Umgebung 100) entsprechenden Konfiguration zu einer der Zielumgebung (beispielsweise der zweiten Umgebung 200) entsprechenden Konfiguration automatisch umkonfiguriert wird, so dass die wenigstens eine Instanz in der Quellumgebung des wenigstens einen Mikrodienstes zu einer Instanz des Mikrodienstes in der Zielumgebung und die wenigstens eine Instanz des wenigstens einem Software-Containers in der Quellumgebung zu einer Instanz des Software-Containers in der Zielumgebung wird. Mithin wird hierdurch der jeweilige Deploymentsatz in die Zielumgebung integriert oder befördert, wobei hierbei Instanzen der beförderten Mikrodienste und/oder der Software-Container umkonfiguriert werden (von jeweils einer Konfiguration der Quellumgebung zu einer Konfiguration der Zielumgebung. So ist es beispielsweise erfindungsgemäß möglich, dass ein Deploymentsatz etwa von einer der Qualifikation entsprechenden Umgebung zu einer der Integration entsprechenden Umgebung verschoben oder befördert wird oder von einer dem Staging entsprechenden Umgebung zu einer der Produktion entsprechenden Umgebung verschoben oder befördert wird. In einem sechsten Prozessschritt 606 wird dargestellt, wie die Aktion durch die Anwendungsschnittstellenfunktionalität 503 (Promotor-API) über eine Schnittstelle (insbesondere eine REST-Schnittstelle) ausgeführt wird, um die Aktion für definierte Deploymentsätze sowie Quell- und Zielumgebungen durchzuführen. In einem siebten Prozessschritt 607 wird durch die Anwendungsschnittstellenfunktionalität 503 (Promotor-API) überprüft - insbesondere durch Validierung des bereitgestellten Tokens (bzw. Kennung) des Nutzers (auch als Nutzer-Token bezeichnet) und des Anfrageinhalts (request content) der Anfrage und es wird die Verschiebung bzw. Beförderung des jeweiligen Deploymentsatzes begonnen bzw. initiiert, indem das Beförderungswerkzeug bzw. das Beförderungsmodul des übergeordneten Verwendungssystems 500 ausgeführt wird. In einem achten Prozessschritt 608 wird an die Anwendungsschnittstellenfunktionalität 503 die erfolgreiche Durchführung zurück berichtet, wobei jedoch der Promotions-Prozess (bzw. der Verschiebeprozess bzw. Beförderungsprozess) asynchron ist; der Promotor (bzw. das Beförderungswerkzeug oder das Beförderungsmodul des übergeordneten Verwendungssystems 500) wird jedoch bei erfolgreicher Operation einen Erfolg zurückmelden und es wird auch eine Nachricht unmittelbar nach Beginn der Beförderungsaktion zurückgemeldet. In einem neunten Prozessschritt 609 hat der Nutzer 501 nach dem Start die Möglichkeit, den aktuellen Status des Deploymentsatzes in Echtzeit innerhalb der Visualisierungsfunktionalität 502. In einem zehnten Prozessschritt 610 startet der Promotor (bzw. das Beförderungswerkzeug oder das Beförderungsmodul des übergeordneten Verwendungssystems 500) den Deployment-Prozess, wobei hierbei zunächst die neueste Deploymentsatz-Vorlage von der Datenbankfunktionalität 95 (insbesondere als git-Repository realisiert) genommen wird. Die Datenbankfunktionalität 95 (bzw. Git-Repository) fungiert als diejenige Stelle bzw. derjenige Ort, an dem alle Versionen bzw. Instanzen von Deploymentsätzen zentral zur Verfügung stehen bzw. bereitgestellt werden. In einem elften Prozessschritt 611 wird die Deploymentsatz-Vorlage geladen und geprüft (insbesondere geparst). Innerhalb der Deploymentsatz-Vorlage sind Platzhalter definiert, die durch den eigentlichen Inhalt der Anfrage ersetzt werden müssen oder Umgebungseinstellungen (z.B. Geheimnisse, Schlüssel und andere spezifische Konfigurationen) enthalten. Ferner werden auch die Anwendungseinstellungen für den Deploymentsatz geladen und geprüft (insbesondere geparst). Die zugehörigen Platzhalter für die Anwendungseinstellungen werden durch den eigentlichen Inhalt ersetzt. Die Umgebungseinstellungen für den Deploymentsatz werden ebenfalls geladen und geparst. Auch die zugehörigen Platzhalter für die Umgebungseinstellungen werden durch den aktuellen Inhalt ersetzt, der vorher geladen wurde. Nachdem das Ersetzen der Platzhalter abgeschlossen ist, wird der Deploymentsatz hinsichtlich der Formatierung, bzw. der Properness geprüft. In einem zwölften Prozessschritt 612 wird der Deploymentsatz an den zugehörigen Umgebungs-Cluster (in der Regel ein Kubernetes-Cluster) gesendet. Der Cluster selbst wird den Deploymentsatz starten, indem die neuen Änderungen in Bezug auf Konfiguration und Container angepasst werden. In einem dreizehnten Prozessschritt 613 wird der fertige Deploymentsatz, der in den vorhergehenden Schritten generiert wurde, als Ausgabe in die Datenbankfunktionalität 95 (Git-Repository) als zusätzlichen Eintrag für die Historie der Deploymentsätze gespeichert. In einem vierzehnten Prozessschritt 614 erhält der Nutzer 501 - sofern alles erfolgreich war - eine Erfolgsmeldung (oder aber eine Fehlermeldung falls nicht), die in der Visualisierungsfunktionalität 502 (Promodash) angezeigt wird. In einem fünfzehnten Prozessschritt 615 prüft die Anwendungsschnittstellenfunktionalität 503 in regelmäßigen Abständen während der Laufzeit der Deploymentsätze innerhalb des Kubernetes-Clusters den aktuellen Stand und Informationen für den Einsatz. In einem sechzehnten Prozessschritt 616 werden die gesammelten Informationen aus der periodischen Überprüfung dem Nutzer 501 ebenfalls präsentiert mit zusätzliche Informationen als Fehler- oder Erfolgsmeldung ähnlich der zuvor genannten Meldung.

Insgesamt ist es erfindungsgemäß durch eine solche Anordnung bzw. ein solches System möglich ein erfindungsgemäßes Verfahren zur Bereitstellung der Funktionalität von mehreren Mikrodiensten 41, 42, 43 und/oder der Funktionalität von mehreren Software-Containern 51, 52, 53 mittels einer Cloud-Infrastruktur 80 bereitzustellen. Das Beförderungswerkzeug bzw. das Beförderungsmodul des übergeordneten Verwendungssystems 500 (d.h. der Promotor) ist das Werkzeug zur Verwaltung von Cluster-Einsätzen. Cluster-Implementierungen werden in den Kubernetes-Implementierungsmanifesten typischerweise als Ist-Code beschrieben. Dies sind in der Regel yaml-Dateien, die den gewünschten Zustand des Kubernetes-Clusters beschreiben. Das "Anwenden" einer solchen Bereitstellungskonfiguration auf einen Kubernetes-Cluster bewirkt, dass Kubernetes Container startet, um schließlich den im Manifest beschriebenen Zustand zu erreichen.

Das Beförderungswerkzeug oder das Beförderungsmodul, Promotor, des übergeordneten Verwendungssystems 500 bzw. das übergeordnete Verwendungssystem 500 selbst hat die folgenden Hauptmerkmale:
-- Jede benötigte Konfiguration wird an einem Ort gespeichert (z.B. in einer Datenbankfunktionalität 95 bzw. einem Git-Repository);
-- Arbeitet mit Konfigurationsvorlagen-Manifesten;
-- Kann vollständig in den aktuellen CI/CD-Fluss (continuous integration / continuous deployment) integriert werden;
-- Containerversionen in Manifesten aktualisieren;
-- Unterstützung mehrerer Umgebungen;
-- Beförderung (bzw. Promotion) von Containerversionen und Manifesten (bzw. Deploymentsätzen) von einer Umgebung in eine andere;
-- Verschlüsselung und Speicherung sensibler Informationen (Geheimnisse) in der Datenbankfunktionalität 95 (Git) mit Hilfe von Sops (Secret OPerationS: "Einfaches und flexibles Werkzeug zur Verwaltung von Geheimnissen");
-- Generieren unveränderlicher Konfigurations- und Geheimhaltungsdateien auf der Grundlage des Inhalts der Vorlagenkonfiguration.
ProMotor ist ein Tool zur Verwaltung von Kubernetes-Bereitstellungssatz-Manifesten in mehreren Umgebungen in einem einzigen Git Repository.

Die Visualisierungsfunktionalität 502 (Promodash bzw. Web-Benutzeroberfläche) für das übergeordnete Verwendungssystem 500 (bzw. für den ProMotor) zeigt den Status für jeden Deploymentsatz und jede Umgebung 100, 200, 300 mit dem aktuellen Status (läuft, gestoppt, Neustart usw.), um einen einfachen Überblick über alle benötigten Informationen zu erhalten. Die Visualisierungsfunktionalität 502 (Promodash) ist auch der Ort, an dem (bzw. über den) die Beförderung bzw. die Promotion für einen Deploymentsatz durchgeführt wird. Die Web-Benutzerschnittstelle bzw. die Visualisierungsfunktionalität 502 einschließlich Benutzerauthentifizierung zum Auslösen eines Deployments, stellt den Status für einen laufenden Einsatz und einer Historie der abgeschlossenen Einsätze dar.

Die Anwendungsschnittstellenfunktionalität 503 (Promotor-API) stellt eine Softwarekomponente dar, die als Vermittler zwischen der eigentlichen Funktionalität des übergeordneten Verwendungssystems 500 bzw. des Promotors und der eigentlichen Benutzerschnittstelle (Visualisierungsfunktionalität 502) interagiert.

Die beiden Hauptkonzepte, mit denen das übergeordnete Verwendungssystem 500 (bzw. der ProMotor) arbeitet, sind Umgebungen 100, 200, 300 und Deploymentsätze. Eine Umgebung ist ein vollständiger Rollout des definierten Systems (inklusive aller Mikrodienste und/oder Software-Container) und entspricht in der Regel einem Kubernetes-Cluster, in dem containerisierte Anwendungen/Microservices laufen. Ein Deploymentsatz ist eine Gruppierung von Anwendungen bzw. Mikrodiensten und entsprechenden Deployment-Einheiten bzw. Software-Containern, die gemeinsam in einer Umgebung eingesetzt werden.

Deploymentsätze bestehen aus einer oder mehreren Deployment-Manifestvorlagen und der zugehörigen Konfiguration. Diese Vorlagen verweisen in der Regel auf die Software-Container, insbesondere auf Docker-Container, die die Anwendungen enthalten, und beschreiben, wie diese Software-Container bereitgestellt werden sollen. Die Manifestvorlagen werden mit den neuesten Containerversionen kombiniert, um die endgültigen Deplomentmanifestdateien zu rendern, die auf den Cluster angewendet werden können. Jeder Deploymentsatz hat eine definierte Startumgebung (beispielsweise die erste Umgebung 100), die nicht unbedingt die erste (überhaupt vorhandene) Umgebung ist. Immer wenn eine neue Version für einen Docker-Container, auf den in einem Deploymentsatz verwiesen wird, erstellt wird, wird der Container automatisch in dieser Startumgebung (im Beispiel die erste Umgebung 100) ausgerollt. Wenn sich ein Deploymentsatz in einem bestimmten stabilen Zustand befindet, kann es in die nächste Umgebung (beispielsweise die zweite Umgebung 200) befördert werden. Ein Deploymentsatz zu befördern (bzw. zu promovieren) bedeutet, den aktuellen Zustand der Vorlagen und der aktuell eingesetzten Containerversionen zu fixieren und diesen Zustand auf die nächste Umgebung (bzw. die Zielumgebung) anzuwenden. Auf diese Weise "durchlaufen" die Deploymentsätze die verschiedenen Umgebungen 100, 200, 300, bis sie eine bestimmte letzte Umgebung erreichen.

Die Umgebungen sind in sich geschlossen und interagieren ohnehin nicht mit den in anderen Umgebungen eingesetzten Diensten. Abhängig von den eingesetzten Anwendungen innerhalb einer Umgebung können jedoch Abhängigkeiten zu externen Ressourcen bestehen, z.B. zu einer externen Datenbank und anderen Diensten wie öffentlichen APIs (Anwendungsprogrammschnittstellen). Die Umgebungen sind ebenfalls geordnet - jede Umgebung hat eine zugehörige Stufe, beginnend beispielsweise mit 0. Die Beförderung eines Deploymentsatzes könnte etwa wie folgt beschrieben werden (von links nach rechts beginnend): (Umgebung für die) Entwicklung (Stufe der Umgebung = 0) --> (Umgebung für) Tests (Stufe der Umgebung = 1) --> (Umgebung für die) Vorproduktion (Stufe der Umgebung = 2) --> (Umgebung für die) Produktion (Stufe der Umgebung = 3).

### Logging / Monitoring

Für die verschiedenen Umgebungen (bzw. environments) kann es von Nöten sein unterschiedliche Log Levels zu konfigurieren. In einer Entwickler Umgebung sollte möglichst viel an Logging Information zur Verfügung stehen, damit die Entwickler evtl. Fehler schon früh erkennen und analysieren können. Hingegen ist es auf produktiven Umgebungen wichtig nur kritische Fehler oder Störungen zu loggen, um auch aus Datenschutz gegenüber den Kunden sicher aufgestellt zu sein. Die Log-Level sind/können wie folgt aufgeteilt werden: ALL - Alle Meldungen werden ungefiltert ausgegeben, TRACE - ausführlicheres Debugging, DEBUG - allgemeines Debugging (Auffinden von Fehlern), INFO - allgemeine Informationen (Programm gestartet, Programm beendet, Verbindung zu Host Foo aufgebaut, Verarbeitung dauerte SoUndSoviel Sekunden ...), WARN - Auftreten einer unerwarteten Situation, ERROR - Fehler (Ausnahme wurde abgefangen. Bearbeitung wurde alternativ fortgesetzt), FATAL - Kritischer Fehler, Programmabbruch

### Application Secrets

Anwendungen die konkrete Kundendaten verarbeiten, verschlüsseln diese Daten bevor die Daten z.B. in einer Datenbank oder auf einen File System gespeichert werden. Für die Verschlüsselung sind sogenannte Secrets von Nöten. Auch hier ist es elementar wichtig, dass diese Secrets von Umgebung zu Umgebung unterschiedlich sind und insbesondere für Produktiv-Umgebungen geheim gehalten werden. Meist werden die Testdaten auf Entwicklungsumgebungen nicht verschlüsselt um die Arbeit zu erleichtern.

### Connections bzw. Verbindungen

Die meisten Microservices sind nicht in sich abgeschlossen und benötigen andere Dienste für deren Funktion, z.B. Datenbanken, Filesysteme, Logging-Server oder andere Microservices. Die technische Information wie die anderen Ressourcen erreichbar sind (meistens interne URLs im Cluster) sind insbesondere in jeder Umgebung unterschiedlich und müssen auch in den Manifesten oder in der Konfiguration für den Microservice pro Umgebung erfolgen.

### Network Policies bzw. Netzwerk-Regeln

Wie für Verbindungen sind auch bestimmte Dienste meist von anderen Diensten abhängig. Damit sichergestellt wird, dass auch nur die benötigten Dienste miteinander kommunizieren, gibt es Network Policies (bzw. Netzwerk-Regeln), welche regeln oder bestimmen, welche Dienste untereinander kommunizieren können. Damit wird auch das Risiko minimiert, dass sich ein Hacker beim Einbruch in das Kubernetescluster einfach von Microservice zu Microservice bewegen kann, um Daten zu stehlen.

### Automatische Skalierung

Container in Kubernetescluster können erfindungsgemäß insbesondere automatisch skaliert werden, so dass z.B. ein neuer Container mit demselben Microservice oder Mikrodienst im selben Cluster gestartet wird, um die Last der Anfragen auf zwei oder mehrere Instanzen innerhalb des Clusters zu verteilen. Die Regeln für die automatische Skalierung sind erfindungsgemäß sehr unterschiedlich für die jeweiligen Umgebungen: Bei Entwicklungsumgebungen gibt es meistens nur eine Instanz des Mikrodienstes und es gibt beispielsweise keine Regeln für eine automatische Skalierung; hingegen sind auf Produktiv-Systemen insbesondere immer zwei Instanzen eines Dienstes bzw. Mikrodienstes vorhanden und die Regeln für eine Skalierung sind in der Regel strikter, um eine Ausfallsicherheit zu garantieren.

### Technische Daten der Container (RAM, CPU)

Software-Container in einem Kubernetescluster unterscheiden sich in der Regel je nach Konfiguration, beispielsweise hinsichtlich ihrer Speicher- und/oder Prozessornutzung (RAM, Random Access Memory, CPU, Central Processing Unit) oder anderer Hardwareanforderungen bzw. hinsichtlich spezifische Parameter und reservieren andere und unterschiedlich viele Ressourcen in unterschiedlichen Umgebungen. Wie auch schon hinsichtlich der Automatischen Skalierung beschrieben, unterscheiden sich solche hardwarebezogenen oder auf die Hardwarenutzung bezogenen Parameter von Entwicklungs- und Produktivumgebungen. Auf Entwicklungsumgebungen ist es kein Problem, wenn den Software-Containern nur ein minimaler Satz an Speicher- oder Prozessor-Ressourcen (RAM und CPU) zur Verfügung steht, da die Latenz einer Anfrage bei der Entwicklung keine allzugroße Rolle spielt. Erfindungsgemäß ist es vorgesehen, dass auf Produktivsystemen einem Software-Container genügend Hardware-Ressourcen zur Verfügung stehen, damit eine Automatische Skalierung funktioniert. Beispielsweise wäre es wenig sinnvoll, einer Instanz eines Mikrodienstes sehr viel Speicher- und Prozessorkapazität zuzuweisen, wenn die Instanz gar nicht in der Lage ist, etwa über ein Netzwerk mehr als 10000 Anfragen pro Zeiteinheit (etwa pro Sekunde oder pro Minute) zu bearbeiten.

## Patentansprüche

1. Verfahren zur Bereitstellung der Funktionalität von mehreren Mikrodiensten (41, 42, 43) und/oder der Funktionalität von mehreren Software-Containern (51, 52, 53) mittels einer Cloud-Infrastruktur (80), wobei bezüglich der Mikrodienste (41, 42, 43) und/oder der Software-Container (51, 52, 53) ein Software-Container-Orchestrierungssystem (90) zu deren Bereitstellung und/oder Skalierung und/oder Verwaltung verwendet wird, wobei durch das Software-Container-Orchestrierungssystem (90) wenigstens eine erste Umgebung (100) und eine zweite Umgebung (200) zur Verfügung gestellt werden, wobei die erste Umgebung (100) Instanzen von ersten Mikrodiensten (141, 142, 143) und/oder Instanzen von ersten Software-Containern (151, 152, 153) als Teil einer ersten Instanz des Software-Container-Orchestrierungssystems (190) umfasst, wobei die zweite Umgebung (200) Instanzen von zweiten Mikrodiensten (241, 242, 243) und/oder Instanzen von zweiten Software-Container (251, 252, 253) als Teil einer zweiten Instanz des Software-Container-Orchestrierungssystems (290) umfasst, wobei zur Verwaltung und Konfiguration sowohl der Instanzen des Software-Container-Orchestrierungssystems (190, 290) als auch der Instanzen von ersten und zweiten Mikrodiensten (141, 142, 143, 241, 242, 243) und/oder von ersten und zweiten Software-Containern (151, 152, 153, 251, 252, 253) ein den Umgebungen (100, 200) übergeordnetes Verwendungssystem (500) benutzt wird, wobei das Verfahren die nachfolgenden Schritte umfasst:
-- in einem ersten Schritt wird wenigstens eine Instanz von wenigstens einem ersten Mikrodienst und/oder wenigstens eine Instanz von wenigstens einem ersten Software-Container als von der ersten Umgebung (100) in die zweiten Umgebung (200) zu verschieben detektiert,
-- in einem zweiten Schritt wird die wenigstens eine Instanz des wenigstens einen ersten Mikrodienstes (141) und/oder die wenigstens eine Instanz des wenigstens einen ersten Software-Containers (151) durch das Verwendungssystem (500) in die zweite Umgebung integriert oder befördert, wobei hierbei die wenigstens eine Instanz des wenigstens einen ersten Mikrodienstes (141) und/oder die wenigstens eine Instanz des wenigstens einen ersten Software-Containers (151) von einer der ersten Umgebung (100) entsprechenden Konfiguration zu einer der zweiten Umgebung (200) entsprechenden Konfiguration automatisch umkonfiguriert wird, so dass die wenigstens eine Instanz des wenigstens einen ersten Mikrodienstes (141) zu einer Instanz eines zweiten Mikrodienstes (241) und/oder die wenigstens eine Instanz des wenigstens einen ersten Software-Containers (151) zu einer Instanz eines zweiten Software-Containers (251) wird,
wobei das Verwendungssystem (500) neben der ersten Umgebung (100) und der zweiten Umgebung (200) wenigstens eine dritte Umgebung (300) berücksichtigt oder umfasst, wobei die Beförderung eines Deploymentsatzes einem sukzessiven Durchlaufen der Umgebungen (100, 200, 300) entsprechend einer Anordnung dieser Umgebungen (100, 200, 300) entspricht, wobei die Umgebungen (100, 200) in sich geschlossen sind und Mikrodienste einer der Umgebungen (100, 200) keine Interaktion mit den Mikrodiensten in einer anderen Umgebung (100, 200) haben,
wobei die erste Umgebung (100) eine Entwicklungsumgebung, die zweite Umgebung (200) eine Testumgebung und die dritte Umgebung (300) eine Produktivumgebung ist,
wobei die Beförderung - von der ersten Umgebung (100) zur zweiten Umgebung (200) oder zwischen zwei anderen Umgebungen - von wenigstens einem Mikrodienst und/oder von wenigstens einem Software-Container und/oder von wenigstens einem Deploymentsatz wenigstens eine teilweise Umkonfigurierung hinsichtlich wenigstens eines Teils der nachfolgenden Parameter umfasst:
-- Logging und/oder Monitoring,
-- Art, Definition und/oder Behandlung von Anwendungs- oder Verarbeitungsgeheimnissen,
-- Verbindungen zu externen Ressourcen und Netzwerkregeln,
-- Automatische Skalierung,
-- Technische Daten oder Kennzahlen von Software-Container, insbesondere hinsichtlich zur Verfügung stehender Speicherplatz und Prozessorleistung,
wobei das Verwendungssystem (500) ein Beförderungswerkzeug oder ein Beförderungsmodul aufweist, wobei das Beförderungswerkzeug oder das Beförderungsmodul folgendes aufweist:
-- jede benötigte Konfiguration wird an einem Ort gespeichert;
-- es arbeitet mit Konfigurationsvorlagen-Manifesten;
-- es kann vollständig in den aktuellen CI/CD-Fluss, continuous integration / continuous deployment, integriert werden;
-- Containerversionen in Manifesten werden aktualisiert;
-- Unterstützung mehrerer Umgebungen;
-- Beförderung von Containerversionen und Manifesten von einer Umgebung in eine andere;
-- Verschlüsselung und Speicherung sensibler Informationen in der Datenbankfunktionalität mit Hilfe von Sops, Secret OPerationS;
-- Generieren unveränderlicher Konfigurations- und Geheimhaltungsdateien auf der Grundlage des Inhalts der Vorlagenkonfiguration.

2. Verfahren nach Anspruch 1, **dadurch gekennzeichnet, dass** als Software-Container-Orchestrierungssystem (90) Kubernetes-Cluster vorgesehen sind und/oder dass als Software-Container (51, 52, 53) insbesondere Docker-Container vorgesehen sind, wobei insbesondere Implementierungen der Kubernetes-Cluster in Kubernetes-Implementierungsmanifesten realisiert sind, insbesondere als YAML-Dateien, YAML Ain't Markup Language.

3. Verfahren nach einem der vorhergehenden Ansprüche, **dadurch gekennzeichnet, dass** zur Speicherung der Umgebungen (100, 200, 300) und/oder ihrer Bestandteile eine Datenbankfunktionalität (95) verwendet wird, insbesondere in Form einer Git-Repository.

4. Verfahren nach einem der vorhergehenden Ansprüche, **dadurch gekennzeichnet, dass** das den Umgebungen (100, 200, 300) übergeordnete Verwendungssystem (500) eine Visualisierungsfunktionalität (502) und/oder eine Anwendungsschnittstellenfunktionalität (503) aufweist.

5. System zur Bereitstellung der Funktionalität von mehreren Mikrodiensten (41, 42, 43) und/oder der Funktionalität von mehreren Software-Containern (51, 52, 53) mittels einer Cloud-Infrastruktur (80), wobei bezüglich der Mikrodienste (41, 42, 43) und/oder der Software-Container (51, 52, 53) ein Software-Container-Orchestrierungssystem (90) zu deren Bereitstellung und/oder Skalierung und/oder Verwaltung verwendet wird, wobei durch das Software-Container-Orchestrierungssystem (90) wenigstens eine erste Umgebung (100) und eine zweite Umgebung (200) zur Verfügung gestellt werden, wobei die erste Umgebung (100) Instanzen von ersten Mikrodiensten (141, 142, 143) und/oder Instanzen von ersten Software-Containern (151, 152, 153) als Teil einer ersten Instanz des Software-Container-Orchestrierungssystems (190) umfasst, wobei die zweite Umgebung (200) Instanzen von zweiten Mikrodiensten (241, 242, 243) und/oder Instanzen von zweiten Software-Container (251, 252, 253) als Teil einer zweiten Instanz des Software-Container-Orchestrierungssystems (290) umfasst, wobei zur Verwaltung und Konfiguration sowohl der Instanzen des Software-Container-Orchestrierungssystems (190, 290) als auch der Instanzen von ersten und zweiten Mikrodiensten (141, 142, 143, 241, 242, 243) und/oder von ersten und zweiten Software-Containern (151, 152, 153, 251, 252, 253) ein den Umgebungen (100, 200) übergeordnetes Verwendungssystem (500) benutzt wird, wobei das System derart konfiguriert ist, dass:
-- wenigstens eine Instanz von wenigstens einem ersten Mikrodienst und/oder wenigstens eine Instanz von wenigstens einem ersten Software-Container als von der ersten Umgebung (100) in die zweiten Umgebung (200) zu verschieben detektiert wird,
-- die wenigstens eine Instanz des wenigstens einen ersten Mikrodienstes (141) und/oder die wenigstens eine Instanz des wenigstens einen ersten Software-Containers (151) durch das Verwendungssystem (500) in die zweite Umgebung integriert oder befördert wird, wobei hierbei die wenigstens eine Instanz des wenigstens einen ersten Mikrodienstes (141) und/oder die wenigstens eine Instanz des wenigstens einen ersten Software-Containers (151) von einer der ersten Umgebung (100) entsprechenden Konfiguration zu einer der zweiten Umgebung (200) entsprechenden Konfiguration automatisch umkonfiguriert wird, so dass die wenigstens eine Instanz des wenigstens einen ersten Mikrodienstes (141) zu einer Instanz eines zweiten Mikrodienstes (241) und/oder die wenigstens eine Instanz des wenigstens einen ersten Software-Containers (151) zu einer Instanz eines zweiten Software-Containers (251) wird,
wobei das Verwendungssystem (500) neben der ersten Umgebung (100) und der zweiten Umgebung (200) wenigstens eine dritte Umgebung (300) berücksichtigt oder umfasst, wobei die Beförderung eines Deploymentsatzes einem sukzessiven Durchlaufen der Umgebungen (100, 200, 300) entsprechend einer Anordnung dieser Umgebungen (100, 200, 300) entspricht, wobei die Umgebungen (100, 200) in sich geschlossen sind und Mikrodienste einer der Umgebungen (100, 200) keine Interaktion mit den Mikrodiensten in einer anderen Umgebung (100, 200) haben,
wobei die erste Umgebung (100) eine Entwicklungsumgebung, die zweite Umgebung (200) eine Testumgebung und die dritte Umgebung (300) eine Produktivumgebung ist,
wobei die Beförderung - von der ersten Umgebung (100) zur zweiten Umgebung (200) oder zwischen zwei anderen Umgebungen - von wenigstens einem Mikrodienst und/oder von wenigstens einem Software-Container und/oder von wenigstens einem Deploymentsatz wenigstens eine teilweise Umkonfigurierung hinsichtlich wenigstens eines Teils der nachfolgenden Parameter umfasst:
-- Logging und/oder Monitoring,
-- Art, Definition und/oder Behandlung von Anwendungs- oder Verarbeitungsgeheimnissen,
-- Verbindungen zu externen Ressourcen und Netzwerkregeln,
-- Automatische Skalierung,
-- Technische Daten oder Kennzahlen von Software-Container, insbesondere hinsichtlich zur Verfügung stehender Speicherplatz und Prozessorleistung,
wobei das Verwendungssystem (500) ein Beförderungswerkzeug oder ein Beförderungsmodul aufweist, wobei das Beförderungswerkzeug oder das Beförderungsmodul folgendes aufweist:
-- jede benötigte Konfiguration wird an einem Ort gespeichert;
-- es arbeitet mit Konfigurationsvorlagen-Manifesten;
-- es kann vollständig in den aktuellen CI/CD-Fluss, continuous integration / continuous deployment, integriert werden;
-- Containerversionen in Manifesten werden aktualisiert;
-- Unterstützung mehrerer Umgebungen;
-- Beförderung von Containerversionen und Manifesten von einer Umgebung in eine andere;
-- Verschlüsselung und Speicherung sensibler Informationen in der Datenbankfunktionalität mit Hilfe von Sops, Secret OPerationS;
-- Generieren unveränderlicher Konfigurations- und Geheimhaltungsdateien auf der Grundlage des Inhalts der Vorlagenkonfiguration.

6. Computerprogramm umfassend Befehle, mit deren Hilfe die Schritte eines Verfahrens nach einem der Ansprüche 1 bis 4 durchführbar sind, wenn das Computerprogramm auf einer programmierbaren Einrichtung ausgeführt wird.

7. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 6 speichert oder überträgt oder wobei das computerlesbare Medium oder das Datenträgersignal den auf einer programmierbaren Einrichtung auszuführenden Teil des Computerprogramms nach Anspruch 6 speichert oder überträgt.

## Claims

1. Method for providing the functionality of multiple microservices (41, 42, 43) and/or the functionality of multiple software containers (51, 52, 53) by means of a cloud infrastructure (80), wherein with respect to the microservices (41, 42, 43) and/or the software containers (51, 52, 53) a software container orchestration system (90) is used for their provision and/or scaling and/or management, wherein at least a first environment (100) and a second environment (200) are provided by the software container orchestration system (90), wherein the first environment (100) comprises instances of first microservices (141, 142, 143) and/or instances of first software containers (151, 152, 153) as part of a first instance of the software container orchestration system (190), wherein the second environment (200) comprises instances of second microservices (241, 242, 243) and/or instances of second software containers (251, 252, 253) as part of a second instance of the software container orchestration system (290), wherein for the management and configuration of both the instances of the software container orchestration system (190, 290) as well as the instances of first and second microservices (141, 142, 143, 241, 242, 243) and/or of first and second software containers (151, 152, 153, 251, 252, 253) a usage system (500) superordinate to the environments (100, 200) is used, wherein the method comprises the following steps:
-- in a first step, at least one instance of at least one first microservice and/or at least one instance of at least one first software container is detected as to be moved from the first environment (100) to the second environment (200),
-- in a second step, the at least one instance of the at least one first microservice (141) and/or the at least one instance of the at least one first software container (151) is integrated or promoted into the second environment by the usage system (500), wherein the at least one instance of the at least one first microservice (141) and/or the at least one instance of the at least one first software container (151) is automatically reconfigured from a configuration corresponding to the first environment (100) to a configuration corresponding to the second environment (200), so that the at least one instance of the at least one first microservice (141) becomes an instance of a second microservice (241) and/or the at least one instance of the at least one first software container (151) becomes an instance of a second software container (251),
wherein the usage system (500) considers or comprises at least a third environment (300) in addition to the first environment (100) and the second environment (200), wherein the promotion of a deployment set corresponds to a successive traversal of the environments (100, 200, 300) according to an arrangement of these environments (100, 200, 300), wherein the environments (100, 200) are self-contained and microservices of one of the environments (100, 200) have no interaction with the microservices in another environment (100, 200),
wherein the first environment (100) is a development environment, the second environment (200) is a test environment and the third environment (300) is a production environment,
wherein the promotion **--** from the first environment (100) to the second environment (200) or between two other environments **--** of at least one microservice and/or of at least one software container and/or of at least one deployment set comprises at least a partial reconfiguration with respect to at least one part of the following parameters:
-- logging and/or monitoring,
-- type, definition and/or treatment of application secrets or processing secrets,
-- connections to external resources and network rules,
-- automatic scaling,
-- technical data or metrics of software containers, in particular with respect to available storage space and processing power,
wherein the usage system (500) comprises a promotion tool or a promotion module, wherein the promotion tool or the promotion module has the following:
-- every required configuration is stored in one place;
-- it works with configuration template manifests;
-- it can be fully integrated into the current CI/CD flow, continuous integration / continuous deployment;
-- container versions in manifests are updated;
-- support for multiple environments;
-- promotion of container versions and manifests from one environment to another;
-- encryption and storage of sensitive information in the database functionality using SOPS, Secret OPerationS;
-- generation of immutable configuration and secret files based on the content of the template configuration.

2. Method according to claim 1, **characterized in that** Kubernetes clusters are provided as software container orchestration system (90) and/or that Docker containers are provided as software containers (51, 52, 53), wherein in particular implementations of the Kubernetes clusters are realized in Kubernetes implementation manifests, in particular as YAML files, YAML Ain't Markup Language.

3. Method according to one of the preceding claims, **characterized in that** database functionality (95) is used for storing the environments (100, 200, 300) and/or their components, in particular in the form of a Git repository.

4. Method according to one of the preceding claims, **characterized in that** the usage system (500) superordinate to the environments (100, 200, 300) comprises visualization functionality (502) and/or application interface functionality (503).

5. System for providing the functionality of multiple microservices (41, 42, 43) and/or the functionality of multiple software containers (51, 52, 53) by means of a cloud infrastructure (80), wherein with respect to the microservices (41, 42, 43) and/or the software containers (51, 52, 53) a software container orchestration system (90) is used for their provision and/or scaling and/or management, wherein at least a first environment (100) and a second environment (200) are provided by the software container orchestration system (90), wherein the first environment (100) comprises instances of first microservices (141, 142, 143) and/or instances of first software containers (151, 152, 153) as part of a first instance of the software container orchestration system (190), wherein the second environment (200) comprises instances of second microservices (241, 242, 243) and/or instances of second software containers (251, 252, 253) as part of a second instance of the software container orchestration system (290), wherein for the management and configuration of both the instances of the software container orchestration system (190, 290) as well as the instances of first and second microservices (141, 142, 143, 241, 242, 243) and/or of first and second software containers (151, 152, 153, 251, 252, 253) a usage system (500) superordinate to the environments (100, 200) is used, wherein the system is configured such that:
-- at least one instance of at least one first microservice and/or at least one instance of at least one first software container is detected as to be moved from the first environment (100) to the second environment (200),
-- the at least one instance of the at least one first microservice (141) and/or the at least one instance of the at least one first software container (151) is integrated or promoted into the second environment by the usage system (500), wherein the at least one instance of the at least one first microservice (141) and/or the at least one instance of the at least one first software container (151) is automatically reconfigured from a configuration corresponding to the first environment (100) to a configuration corresponding to the second environment (200), so that the at least one instance of the at least one first microservice (141) becomes an instance of a second microservice (241) and/or the at least one instance of the at least one first software container (151) becomes an instance of a second software container (251),
wherein the usage system (500) considers or comprises at least a third environment (300) in addition to the first environment (100) and the second environment (200), wherein the promotion of a deployment set corresponds to a successive traversal of the environments (100, 200, 300) according to an arrangement of these environments (100, 200, 300), wherein the environments (100, 200) are self-contained and microservices of one of the environments (100, 200) have no interaction with the microservices in another environment (100, 200),
wherein the first environment (100) is a development environment, the second environment (200) is a test environment and the third environment (300) is a production environment,
wherein the promotion **--** from the first environment (100) to the second environment (200) or between two other environments **--** of at least one microservice and/or of at least one software container and/or of at least one deployment set comprises at least a partial reconfiguration with respect to at least one part of the following parameters:
-- logging and/or monitoring,
-- type, definition and/or treatment of application secrets or processing secrets,
-- connections to external resources and network rules,
-- automatic scaling,
-- technical data or metrics of software containers, in particular with respect to available storage space and processing power,
wherein the usage system (500) comprises a promotion tool or a promotion module, wherein the promotion tool or the promotion module has the following:
-- every required configuration is stored in one place;
-- it works with configuration template manifests;
-- it can be fully integrated into the current CI/CD flow, continuous integration / continuous deployment;
-- container versions in manifests are updated;
-- support for multiple environments;
-- promotion of container versions and manifests from one environment to another;
-- encryption and storage of sensitive information in the database functionality using SOPS, Secret OPerationS;
-- generation of immutable configuration and secret files based on the content of the template configuration.

6. Computer program comprising instructions by means of which the steps of a method according to one of claims 1 to 4 can be carried out when the computer program is executed on a programmable device.

7. Computer-readable medium, provided for storing a computer program, or data carrier signal, provided for transmitting a computer program, wherein the computer-readable medium or the data carrier signal stores or transmits the computer program according to claim 6 or wherein the computer-readable medium or the data carrier signal stores or transmits the part of the computer program according to claim 6 to be executed on a programmable device.

## Revendications

1. Procédé pour fournir la fonctionnalité de plusieurs microservices (41, 42, 43) et/ou la fonctionnalité de plusieurs conteneurs logiciels (51, 52, 53) au moyen d'une infrastructure cloud (80), dans lequel concernant les microservices (41, 42, 43) et/ou les conteneurs logiciels (51, 52, 53) un système d'orchestration de conteneurs logiciels (90) est utilisé pour leur fourniture et/ou mise à l'échelle et/ou gestion, dans lequel au moins un premier environnement (100) et un deuxième environnement (200) sont mis à disposition par le système d'orchestration de conteneurs logiciels (90), dans lequel le premier environnement (100) comprend des instances de premiers microservices (141, 142, 143) et/ou des instances de premiers conteneurs logiciels (151, 152, 153) comme partie d'une première instance du système d'orchestration de conteneurs logiciels (190), dans lequel le deuxième environnement (200) comprend des instances de deuxièmes microservices (241, 242, 243) et/ou des instances de deuxièmes conteneurs logiciels (251, 252, 253) comme partie d'une deuxième instance du système d'orchestration de conteneurs logiciels (290), dans lequel pour la gestion et la configuration tant des instances du système d'orchestration de conteneurs logiciels (190, 290) que des instances de premiers et deuxièmes microservices (141, 142, 143, 241, 242, 243) et/ou de premiers et deuxièmes conteneurs logiciels (151, 152, 153, 251, 252, 253) un système d'utilisation (500) supérieur aux environnements (100, 200) est utilisé, dans lequel le procédé comprend les étapes suivantes :
-- dans une première étape, au moins une instance d'au moins un premier microservice et/ou au moins une instance d'au moins un premier conteneur logiciel est détectée comme devant être déplacée du premier environnement (100) vers le deuxième environnement (200),
**--** dans une deuxième étape, l'au moins une instance de l'au moins un premier microservice (141) et/ou l'au moins une instance de l'au moins un premier conteneur logiciel (151) est intégrée ou promue dans le deuxième environnement par le système d'utilisation (500), dans lequel l'au moins une instance de l'au moins un premier microservice (141) et/ou l'au moins une instance de l'au moins un premier conteneur logiciel (151) est automatiquement reconfigurée d'une configuration correspondant au premier environnement (100) à une configuration correspondant au deuxième environnement (200), de sorte que l'au moins une instance de l'au moins un premier microservice (141) devient une instance d'un deuxième microservice (241) et/ou l'au moins une instance de l'au moins un premier conteneur logiciel (151) devient une instance d'un deuxième conteneur logiciel (251),
dans lequel le système d'utilisation (500) considère ou comprend au moins un troisième environnement (300) en plus du premier environnement (100) et du deuxième environnement (200), dans lequel la promotion d'un jeu de déploiement correspond à un parcours successif des environnements (100, 200, 300) selon un arrangement de ces environnements (100, 200, 300), dans lequel les environnements (100, 200) sont autonomes et les microservices d'un des environnements (100, 200) n'ont aucune interaction avec les microservices dans un autre environnement (100, 200),
dans lequel le premier environnement (100) est un environnement de développement, le deuxième environnement (200) est un environnement de test et le troisième environnement (300) est un environnement de production,
dans lequel la promotion **--** du premier environnement (100) vers le deuxième environnement (200) ou entre deux autres environnements **--** d'au moins un microservice et/ou d'au moins un conteneur logiciel et/ou d'au moins un jeu de déploiement comprend au moins une reconfiguration partielle concernant au moins une partie des paramètres suivants :
-- journalisation et/ou surveillance,
-- type, définition et/ou traitement des secrets d'application ou secrets de traitement,
-- connexions aux ressources externes et règles de réseau,
-- mise à l'échelle automatique,
-- données techniques ou métriques des conteneurs logiciels, en particulier concernant l'espace de stockage et la puissance de traitement disponibles,
dans lequel le système d'utilisation (500) comprend un outil de promotion ou un module de promotion, dans lequel l'outil de promotion ou le module de promotion possède ce qui suit :
-- chaque configuration requise est stockée en un lieu ;
-- il fonctionne avec des manifestes de modèles de configuration ;
-- il peut être entièrement intégré dans le flux CI/CD actuel, intégration continue / déploiement continu ;
-- les versions de conteneurs dans les manifestes sont mises à jour ;
-- support de multiples environnements ;
-- promotion des versions de conteneurs et des manifestes d'un environnement à un autre ;
-- chiffrement et stockage d'informations sensibles dans la fonctionnalité de base de données à l'aide de SOPS, Secret OPerationS ;
-- génération de fichiers de configuration et de secret immuables basés sur le contenu de la configuration de modèle.

2. Procédé selon la revendication 1, **caractérisé en ce que** des clusters Kubernetes sont prévus comme système d'orchestration de conteneurs logiciels (90) et/ou que des conteneurs Docker sont prévus comme conteneurs logiciels (51, 52, 53), dans lequel en particulier les implémentations des clusters Kubernetes sont réalisées dans des manifestes d'implémentation Kubernetes, en particulier comme fichiers YAML, YAML Ain't Markup Language.

3. Procédé selon l'une des revendications précédentes, **caractérisé en ce qu'**une fonctionnalité de base de données (95) est utilisée pour le stockage des environnements (100, 200, 300) et/ou de leurs composants, en particulier sous la forme d'un dépôt Git.

4. Procédé selon l'une des revendications précédentes, **caractérisé en ce que** le système d'utilisation (500) supérieur aux environnements (100, 200, 300) comprend une fonctionnalité de visualisation (502) et/ou une fonctionnalité d'interface d'application (503).

5. Système pour fournir la fonctionnalité de plusieurs microservices (41, 42, 43) et/ou la fonctionnalité de plusieurs conteneurs logiciels (51, 52, 53) au moyen d'une infrastructure cloud (80), dans lequel concernant les microservices (41, 42, 43) et/ou les conteneurs logiciels (51, 52, 53) un système d'orchestration de conteneurs logiciels (90) est utilisé pour leur fourniture et/ou mise à l'échelle et/ou gestion, dans lequel au moins un premier environnement (100) et un deuxième environnement (200) sont mis à disposition par le système d'orchestration de conteneurs logiciels (90), dans lequel le premier environnement (100) comprend des instances de premiers microservices (141, 142, 143) et/ou des instances de premiers conteneurs logiciels (151, 152, 153) comme partie d'une première instance du système d'orchestration de conteneurs logiciels (190), dans lequel le deuxième environnement (200) comprend des instances de deuxièmes microservices (241, 242, 243) et/ou des instances de deuxièmes conteneurs logiciels (251, 252, 253) comme partie d'une deuxième instance du système d'orchestration de conteneurs logiciels (290), dans lequel pour la gestion et la configuration tant des instances du système d'orchestration de conteneurs logiciels (190, 290) que des instances de premiers et deuxièmes microservices (141, 142, 143, 241, 242, 243) et/ou de premiers et deuxièmes conteneurs logiciels (151, 152, 153, 251, 252, 253) un système d'utilisation (500) supérieur aux environnements (100, 200) est utilisé, dans lequel le système est configuré de telle sorte que :
-- au moins une instance d'au moins un premier microservice et/ou au moins une instance d'au moins un premier conteneur logiciel est détectée comme devant être déplacée du premier environnement (100) vers le deuxième environnement (200),
-- l'au moins une instance de l'au moins un premier microservice (141) et/ou l'au moins une instance de l'au moins un premier conteneur logiciel (151) est intégrée ou promue dans le deuxième environnement par le système d'utilisation (500), dans lequel l'au moins une instance de l'au moins un premier microservice (141) et/ou l'au moins une instance de l'au moins un premier conteneur logiciel (151) est automatiquement reconfigurée d'une configuration correspondant au premier environnement (100) à une configuration correspondant au deuxième environnement (200), de sorte que l'au moins une instance de l'au moins un premier microservice (141) devient une instance d'un deuxième microservice (241) et/ou l'au moins une instance de l'au moins un premier conteneur logiciel (151) devient une instance d'un deuxième conteneur logiciel (251),
dans lequel le système d'utilisation (500) considère ou comprend au moins un troisième environnement (300) en plus du premier environnement (100) et du deuxième environnement (200), dans lequel la promotion d'un jeu de déploiement correspond à un parcours successif des environnements (100, 200, 300) selon un arrangement de ces environnements (100, 200, 300), dans lequel les environnements (100, 200) sont autonomes et les microservices d'un des environnements (100, 200) n'ont aucune interaction avec les microservices dans un autre environnement (100, 200),
dans lequel le premier environnement (100) est un environnement de développement, le deuxième environnement (200) est un environnement de test et le troisième environnement (300) est un environnement de production,
dans lequel la promotion **--** du premier environnement (100) vers le deuxième environnement (200) ou entre deux autres environnements **--** d'au moins un microservice et/ou d'au moins un conteneur logiciel et/ou d'au moins un jeu de déploiement comprend au moins une reconfiguration partielle concernant au moins une partie des paramètres suivants :
-- journalisation et/ou surveillance,
-- type, définition et/ou traitement des secrets d'application ou secrets de traitement,
-- connexions aux ressources externes et règles de réseau,
-- mise à l'échelle automatique,
-- données techniques ou métriques des conteneurs logiciels, en particulier concernant l'espace de stockage et la puissance de traitement disponibles,
dans lequel le système d'utilisation (500) comprend un outil de promotion ou un module de promotion, dans lequel l'outil de promotion ou le module de promotion possède ce qui suit :
-- chaque configuration requise est stockée en un lieu ;
-- il fonctionne avec des manifestes de modèles de configuration ;
-- il peut être entièrement intégré dans le flux CI/CD actuel, intégration continue / déploiement continu ;
**--** les versions de conteneurs dans les manifestes sont mises à jour ;
-- support de multiples environnements ;
-- promotion des versions de conteneurs et des manifestes d'un environnement à un autre ;
-- chiffrement et stockage d'informations sensibles dans la fonctionnalité de base de données à l'aide de SOPS, Secret OPerationS ;
-- génération de fichiers de configuration et de secret immuables basés sur le contenu de la configuration de modèle.

6. Programme informatique comprenant des instructions au moyen desquelles les étapes d'un procédé selon l'une des revendications 1 à 4 peuvent être exécutées lorsque le programme informatique est exécuté sur un dispositif programmable.

7. Support lisible par ordinateur, prévu pour stocker un programme informatique, ou signal de support de données, prévu pour transmettre un programme informatique, dans lequel le support lisible par ordinateur ou le signal de support de données stocke ou transmet le programme informatique selon la revendication 6 ou dans lequel le support lisible par ordinateur ou le signal de support de données stocke ou transmet la partie du programme informatique selon la revendication 6 à exécuter sur un dispositif programmable.
